# EUROPEAN PATENT APPLICATION

(11) **EP 2 086 164 A1**
(43) Date of publication of application: **05.08.2009**
(21) Application number: 08171679.7
(22) Date of filing: 15.12.2008
(51) Int. Cl.: H04L 12/14, H04W 4/24

(54) **Charging system, apparatus and method**

(30) Priority: 03.02.2008 CN 200810005093
(71) Applicant: Huawei Technologies Co., Ltd., Longgang District, Shenzhen, Guangdong 518129 (CN)
(72) Inventor: Wang, Bin, 518129, Shenzhen (CN)
(74) Representative: Thun, Clemens

(57) **Abstract**

The present invention relates to a charging system, a charging apparatus and a charging method. The charging system includes an access apparatus for enable an accessing of a User Equipment (UE), a control apparatus for obtaining user information and service information, and a charge apparatus for obtaining and sending the tariff information of the service currently used or to be used according to the user information and service information. The charging apparatus includes an expense module for obtaining the tariff information, a judging module for judging whether the User Equipment (UE) has activated the tariff notification service, and a notifying module for sending the tariff information. Preliminary tariff notification can be implemented through the charging system, charging apparatus and charging method under the embodiments of the present invention.

## Description

### FIELD OF THE INVENTION

The present invention relates to the field of communication technologies, and in particular, to a charging system, a charging apparatus and a charging method.

### BACKGROUND

With the development of telecom services, the communication services are more and more diversified, for example, data services which are subject to traffic-based charging, Value-Added Service (VAS) which are subject to event-based charging in addition to traditional session services. With the diversification of communication services, the expense calculation is more and more complicated. In order to integrate multiple charging modes, an Online Charging System (OCS)-based integrated charging solution arises, which separates the charging part on the basis of the traditional intelligent network and uses the OCS to obtain tariff, perform rating and deduct balance. The system for implementing session charging in the OCS-based integrated charging solution includes: a Mobile Switching Center (MSC), a Service Control Point (SCP) and an OCS, where the MSC is adapted to enable an access of the UE and the service used by the UE; the SCP obtains the user information of the UE and the service information of the service from the MSC, and sends the user information and service information to the OCS; and the OCS implements charging for the service according to the user information, service information and the charging policies.

For the purpose of transparent charging, the User Equipment (UE) needs to understand the expense of each session. In the case that the charging policies are simple, the user can obtain the expense of each session through mental memory. However, with more and more complicated charging circumstances, the charging processes of the operator become more and more precise, which gives rise to diversified charging modes such as time-varying bonus. The UE can hardly memorize and identify so many charging modes that emerge. With the development of the telecom industry, the UE requirements are increasing continuously. The UE needs to understand the incurred expenses without the trouble of memorizing complex charging modes transparently. For example, the UE expects to know the duration of the current conversation, tariff of the conversation, expenses arising from the conversation, and the account balance after the conversation. The Advice Of Charge at the End of conversation (AOCE) arises in response to such requirements. For example, in the case of the intelligent public telephone, the AOCE service displays the charge on the telephone set and the monitoring software immediately after completion of the conversation. However, the AOCE service notifies the charge after completion of the conversation. Preferably, the user desires to know the charging information such as tariff of a conversation immediately after dialing the number of the called party, and select whether to continue or give up dialing according to the charging information.

### SUMMARY

The goal of the present invention is to provide a charging system, apparatus and method enabled to reduce or even to overcome the shortcomings of charging according to the prior art.

According to a first aspect of the present invention this goal is achieved by a charging apparatus for charging a User Equipment, UE, for a service, wherein the apparatus is adapted to send a tariff notification message carrying the tariff of the service to be used based on user information of the UE and service information of the service to notify the tariff. According to this first aspect of the invention, thus providing a preliminary charge prompt is foreseen. According to one implementation of the first aspect of the invention, the tariff to be used includes the tariff to be currently used and the tariff to be used later.

According to one implementation of the first aspect of the invention the charging apparatus comprises: an expense module, adapted to obtain the tariff of to be used corresponding to the service information according to the service information; a judging module, adapted to judge whether the UE corresponding to the user information has activated the tariff notification service according to the user information corresponding to the service information; and a notifying module, adapted to add the tariff of the service corresponding to the UE which has activated the tariff notification service into the tariff notification message, and send the tariff notification message.

According to one further development of the latter implementation the judge module judges whether the tariff notification service has been activated according to the user information corresponding to the service, after the expense module obtains the tariff of the service, so as to avoid further operations subsequent to failure of the expense module.

According to a second aspect of the present invention this goal is achieved by a charging system for charging a service, the charging system comprises the charging apparatus of implementations of the first aspect of the invention, an access apparatus, adapted to enable an access of a UE and prompt the tariff of the service to be used to the UE; a control apparatus, adapted to obtain the user information corresponding to the UE and service information corresponding to the service according to the UE and the current service respectively; wherein, the control apparatus is further adapted to send a prompt message carrying the tariff of the service to be used to the access apparatus in response to receiving the tariff notification message from the charging apparatus. According to one implementation of the second aspect of the invention, the tariff to be used includes the tariff to be currently used and the tariff to be used later.

For the session services subject to duration-based charging, one implementation form of such access apparatus may be a MSC, another implementation form of such access apparatus may be a Service Switching Point. According to such implementation form the UE and the service currently used or to be used by the UE may for example access the MSC or SSP through an access network. For the data services subject to traffic-based charging, one implementation form of such access apparatus may be a Gateway GPRS Supporting Node, GGSN, or a Packet Data Service Node, PDSN. According to such implementation form the UE and the service currently used by the UE may for example access the GGSN or PDSN through an access network. For the Value-Added Service, VAS, subject to event-based charging, another implementation form of such access apparatus may be an Integrated Service Management Access Point, ISMAP. According to such implementation form the UE user may for example be connected with the ISMAP through a service engine.

. According to a third aspect of the present invention, this goal is archived by providing a charging method, for charging UE for a service, the method comprises: receiving user information and service information, wherein the user information corresponds to the UE, and the service information corresponds to the service; obtaining the tariff of the service to be used corresponding to the service information according to the service information ; judging whether the UE corresponding to the user information has activated a tariff notification service according to the user information, and sending a tariff notification message carrying the tariff of the service to be used so as to make it possible to notify the UE which has activated the tariff notification service. According to one implementation of the third aspect of the invention, the tariff to be used includes the tariff to be currently used and the tariff to be used later.

According to a fourth aspect of the present invention, this goal is archived by providing a charging method for charging a service. The method comprises: obtaining user information and service information from an access apparatus, wherein the user information corresponds to the UE and the service information corresponds to the current service used by the UE; sending user information and service information to a charging apparatus; receiving a tariff notification message carrying the tariff of the service to be used from the charging apparatus, and sending a prompt message carrying the tariff to the access apparatus to notify the tariff to the UE. According to one implementation of the fourth aspect of the invention, the tariff to be used includes the tariff to be currently used and the tariff to be used later.

The charging apparatus in the embodiment of the present invention not only obtain the tariff of the current service or to be used, but also send the tariff. After receiving the tariff notification message that carries the tariff information, the control apparatus can instruct the access apparatus to notify the tariff of the service to the UE, thus making the charging process transparent.

### BRIEF DESCRIPTION OF THE DRAWINGS

Figure 1 shows a simple architecture of a charging system according to the first embodiment of the present invention.

Figure 2 shows a simple network architecture of different service types according to an embodiment of the invention.

Figure 3 shows a simple architecture of a charging system according to a second embodiment of the present invention.

Figure 4 shows a simple architecture of a charging apparatus according to a first embodiment of the present invention.

Figure 5 shows a simple architecture of a charging apparatus according to a second embodiment of the present invention.

Figure 6 is a flowchart of a charging method according to a first embodiment of the invention.

Figure 7 is a flowchart of a charging method according to a second embodiment of the invention.

Figure 8 shows a flowchart of process to handle the UE which has not activated the tariff notification service of the charging method under the embodiments of present invention.

### DETAILED DESCRIPTION

The technical solution of the present invention is hereinafter described in detail with reference to the embodiments and accompanying drawings.

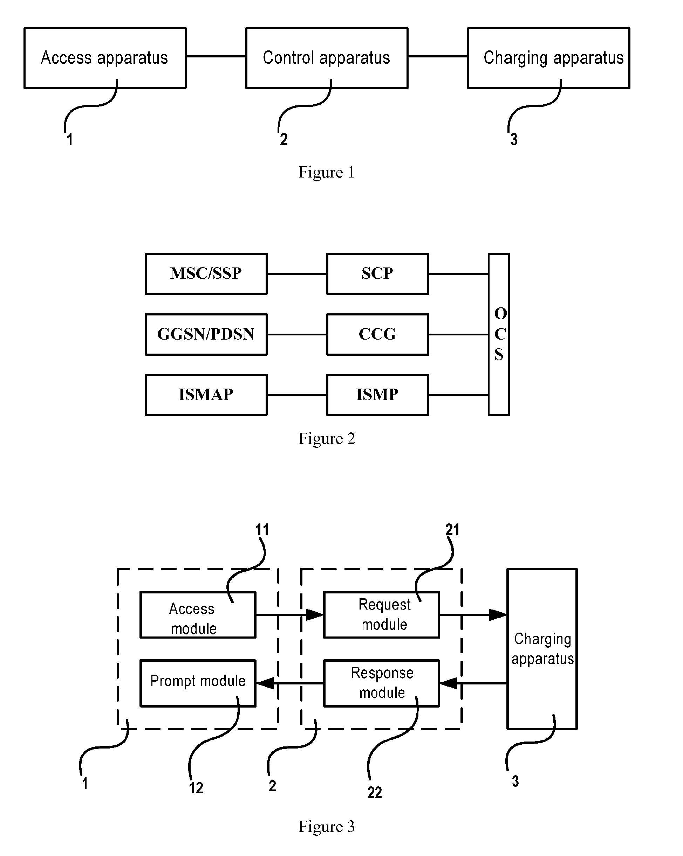

Figure 1 shows the architecture of a charging system according to the first embodiment of the present invention. The charging system in the first embodiment includes an access apparatus 1, a control apparatus 2 and a charging apparatus 3. The access apparatus 1 is adapted to enable an access of the UE, and notify the tariff of the service currently used by the UE to the UE. The control apparatus 2 is adapted to obtain the user information corresponding to the UE and the service information corresponding to the current service according to the UE and the current service,. The charging apparatus 3 is adapted to send an tariff notification message to the control apparatus 2 according to the user information and service information obtained by the control apparatus 2, with the tariff of the current service carried in the tariff notification (i.e. tariff notification) message. The control apparatus 2 is further adapted to send a prompt message to the access apparatus 1 after receiving the tariff notification message, with the tariff of the current service carried in the prompt message

In this embodiment, the charging apparatus judges whether the UE has activated tariff notification service according to the user information and the service information. If the UE has activated the tariff notification service, the charging apparatus sends a tariff notification message to the control apparatus, with the tariff of the service currently used by the UE carried in the message. After receiving the tariff notification message, the control apparatus sends a prompt message to the access apparatus, so that the access apparatus notifies the tariff information to the UE. The tariff notification message is generated as soon as the service is accessed. By comparison, in the prior art, the tariff notification message is generated after completion of using the service. Therefore, the embodiments of the present invention provide a preliminary charge prompt.

Referring to the network connection architecture of different service types shown in Figure 2: (i) For the session services subject to duration-based charging, the access apparatus in this embodiment is an MSC or a Service Switching Point (SSP); the UE and the service currently used by the UE access the MSC or SSP through the access network; the control apparatus is an SCP; and the charging apparatus is an OCS; (ii) for the data services subject to traffic-based charging, the access apparatus in this embodiment is a Gateway GPRS Supporting Node (GGSN) or a Packet Data Service Node (PDSN); the UE and the service currently used by the UE access the GGSN or PDSN through the access network; the control apparatus is a Content Charging Gateway (CCG), and the charging apparatus is an OCS; (iii) for the VAS subject to event-based charging, the access apparatus in this embodiment is an Integrated Service Management Access Point (ISMAP); the UE user is connected with the ISMAP through a service engine; the control apparatus is an Integrated Service Management Platform (ISMP); and the charging apparatus is an OCS.

Figure 3 shows the architecture of a charging system according to the second embodiment of the present invention. Compared with the first embodiment shown in Figure 1, the access apparatus 1 in the second embodiment includes an access module 11, adapted to enable an access of the UE; and a prompt module 12, adapted to notify the tariff of the service currently used by the UE to the UE. The control apparatus 2 includes: (i) a request module 21, adapted to obtain the user information corresponding to the UE and the service information corresponding to the current service according to the UE and the current service, and send the user information and service information to the charging apparatus 3; and (ii) a response module 22, adapted to send a prompt message to the prompt module 12 after receiving the tariff notification message from the charging apparatus 3, wherein the prompt message carries the tariff of the current service obtained according to the tariff notification message.

In the second embodiment, the prompt module can notify the tariff information to the UE to accomplish a preliminary charge prompt.

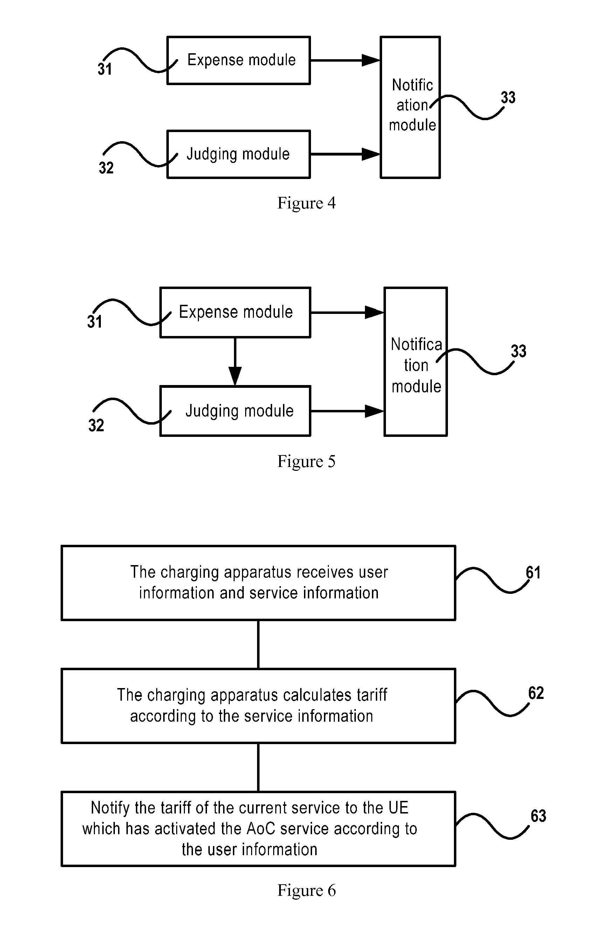

Figure 4 shows the architecture of a charging apparatus according to the first embodiment of the present invention. The charging apparatus in the first embodiment includes an expense module 31, a judging module 32 and a notification module 33. The expense module 31 is adapted to obtain the tariff of the current service corresponding to the service information according to the service information. The judging module 32 is adapted to judge whether the UE corresponding to the user information has activated the tariff notification service according to the user information corresponding to the service information. The notifying module 33 is adapted to add the tariff of the current service corresponding to the UE which has activated the tariff notification service into the tariff notification message, and send the tariff notification message.

The judging module in the first embodiment judges whether the UE has activated the tariff notification service, and, if so, notifies the tariff information obtained by the expense module to the UE through a notifying module, thus accomplishing transparent charging for the UE.

Figure 5 shows the structure of a charging apparatus according to second embodiment of the present invention. Compared with the first embodiment shown in Figure 4, the judging module 32 in the second embodiment judges whether the tariff notification service has been activated according to the user information corresponding to the current service handled by the expense module, after the expense module 31 obtains the tariff of the current service.

The second embodiment adopts the serial processing mode, which avoids further operations subsequent to failure of the expense module, thus reducing the workload.

Figure 6 is a flowchart of a charging method according to the first embodiment of the invention, including the steps hereinafter.

Step 61: The charging apparatus receives user information and service information, wherein the user information corresponds to the UE, and the service information corresponds to the service currently used by the UE.

Step 62: The charging apparatus obtains the tariff of the current service corresponding to the service information according to the service information.

Step 63: The charging apparatus judges whether the UE corresponding to the user information has activated the tariff notification service according to the user information, and notifies the tariff of the current service corresponding to the UE to the UE which has activated the tariff notification service.

The charging apparatus in the second embodiment can send tariff information to the UE which has activated the tariff notification service, thus fulfilling transparent charging for the UE.

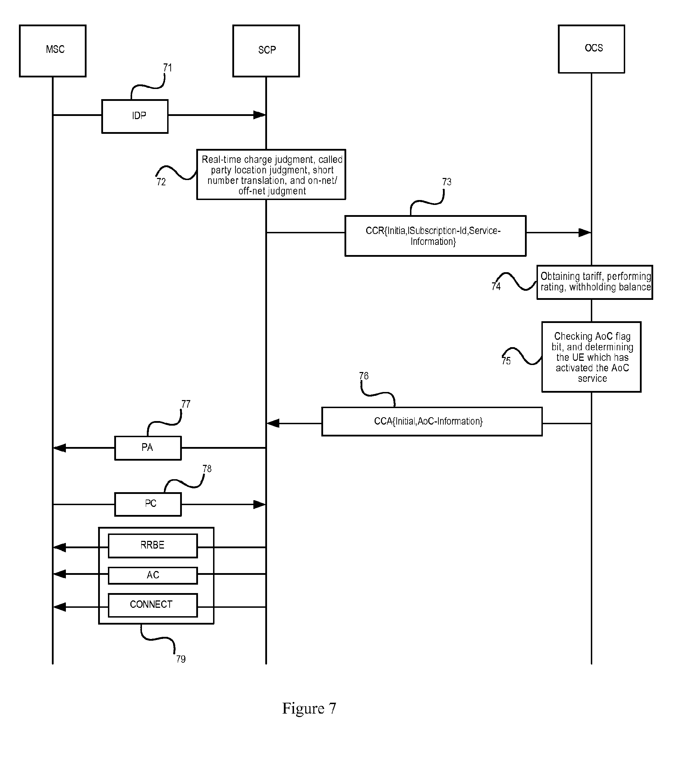

Figure 7 is a flowchart of a charging method according to another embodiment of the invention, taking session services as an example, in the embodiment, the tariff notification service is tariff notification service, the tariff notification message is AOC message, including the steps hereinafter.

Step 71: The access apparatus MSC (or SSP) sends an Initial Detection Point (IDP) message. The IDP message carries the subscription ID of the UE that accesses the MSC, the called party ID of the called UE where the call is terminated. The subscription ID and the called party ID are used for representing the identity of the UE and the called UE.

Step 72: The control apparatus SCP judges whether the UE is a real-time charging UE according to the subscription ID and the preset user database (or treats all the UEs receiving the IDP messages as real-time charging UEs); obtains the location information according to the subscription ID and the called party ID; translates the short number and judges whether the call is inside or outside the network according to the subscription ID and the called party ID. For example, the control apparatus SCP sends a query message (ATI message) to the Home Location Register (HLR) to obtain location information of the called party and the called party, and further judges whether the called party is roaming or whether the calling party or called party is entitled to Free Roaming to the Same City (FRSC) bonus or the cell bonus.

Step 73: The SCP adds the subscription ID of the previous real-time charging UE and the location information obtained according to the subscription ID into the user information corresponding to the real-time charging UE; adds the results of short number translation and on-net/off-net judgment into the service information corresponding to the real-time charging UE; and adds the user information of the real-time charging UE and the service information into the Credit Control Request (CCR). The user information includes a Subscription-Id that represents the UE identity, and the service information that represents the service currently used by the UE. The service information may include service type (Service-Information) such as local call and toll call, and service request quantity such as Request Service Unit (RSU) time "RSU (CC-time)" or RSU sum. The SCP sends the CCR (which carries Initial, RSU (CC-time), Subscription-Id, Service-Information) to the AoC apparatus OCS.

Step 74: The charging apparatus OCS obtains the tariff of the current service according to the service type and the preset charging policy, and performs rating and withholds an account balance according to the tariff and the service request quantity.

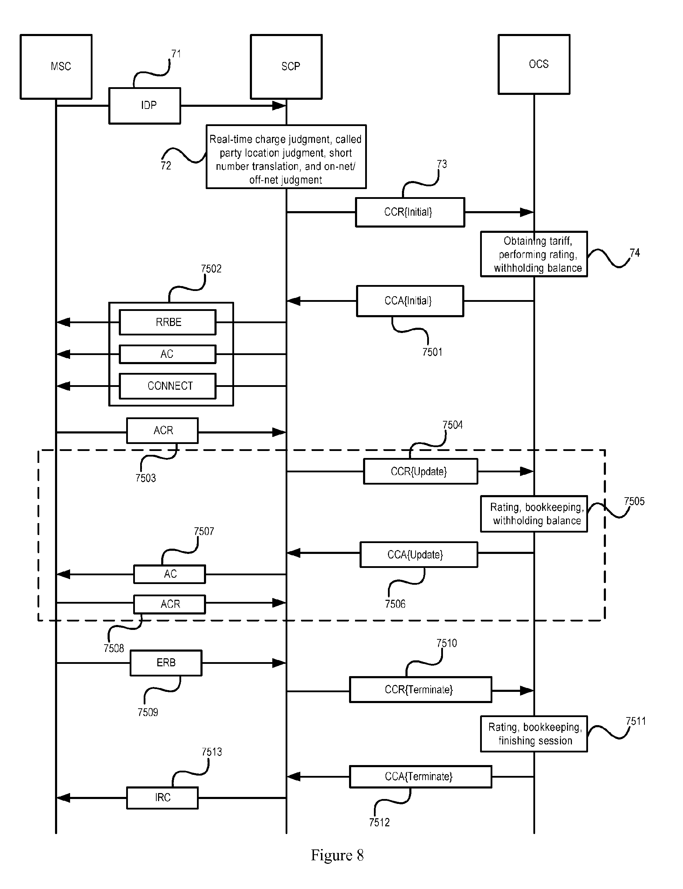

Step 75: The OCS judges whether the UE has activated the AoC service according to AoC flag bit of the UE, the user information and the preset subscription relationship, and performs step 76 for the UE which has activated the AoC service. For the process of handling the session services on a UE which has not activated the AoC service, see the flowchart shown in Figure 8. After the OCS determines that the UE has not activated the AoC service, the steps hereinafter occur.

Step 7501: The returns the corresponding Credit Control Answer (CCA) message to the SCP according to the results of rating and account balance withholding. For example, if the UE requests for 10-minute conversation but the account balance is enough for only five minutes, the OCS will return a 5-minute traffic instead of the requested 10-minute traffic; if the account balance is enough, the OCS will return the traffic as requested.

Step 7502: According to the CCA, the SCP sends to the MSC a Request Basic Call State Model (BCSM) Event message (namely, an RRBE message), an Apply Charge (AC) message, and a CONNECT message that starts a conversation, thus setting up a session process.

Step 7503: The MSC monitors the state of the user using the service, and sends to the SCP an Apply Charge Report (ACR) corresponding to the AC.

Step 7504: When the traffic previously requested by the user is used up, the user needs to request for traffic again in order to keep the session state. Therefore, the SCP sends a CCR (CCR{update}) again, including the consumed traffic and requested traffic.

Step 7505: According to the consumed traffic in the CCR {update}, the OCS deducts the consumed credit quota; according to the requested traffic, the OCS performs rating and withholding for the next credit quota.

Step 7506: The OCS returns the corresponding CCA {update} to the SCP.

Step 7507: According to the CCA{update}, the SCP sends an AC to the MSC to start over the charging.

Step 7508: The MSC sends an ACR to the SCP. Steps 7504-7507 (indicated by dotted line) can be repeated, depending on the consumption of the user.

Step 7509: The MSC sends to the SCP an Event Report BCSM (ERB) corresponding to the RRBE, in order to terminate the service use.

Step 7510: In order to terminate the service use, the SCP sends the last CCR (CCR{terminate}) to the OCS, including the service consumption amount.

Step 7511: The OCS performs rating for the consumed service, and deducts the corresponding balance (namely, bookkeeping), thus finishing the expense bookkeeping.

Step 7512: The OCS sends the corresponding CCA{terminate} to the SCP.

Step 7513: The SCP sends a DISCONNECT message IRC to the MSC, thus finishing a session process.

Step 76: The OCS adds the tariff of the current service corresponding to the UE which has activated the AoC service and the account balance of the user into an AoC message, and send such information to the SCP through a CCA. Therefore, the CCA includes an AoC in addition to an "RC=Success" which represents that the charge request is successful, and a Granted Service Unit (GSU) which represents the quantity of service units provided by the OCS to the user, for example, GSU (300S). Accordingly, the DCC protocol needs to add an AoC Information Attribute Value Pair (AoC-Information AVP), the composition of which is listed below:

| **AVP name** | **Data type** |
|---|---|
| [AoC-Information] | Grouped |
| [AoC-Balance] | Unsigned32 |
| [AoC-Language-ID] | Enumerated |
| *[AoC-Tariff] | Grouped |
| [AoC-Start-Time] | Unsigned32 |
| [AoC-Unit] | Unsigned32 |
| {AoC-Price} | Unsigned32 |

*wherein:*
AoC-Information is service information of Advice of Charge (AoC), and is an AVP group. The specific syntax is as follows:

```
         AoC-Information ::= < AVP Header>
         [AoC-Balance]
         [AoC-Language-ID]
         *[AoC-Tariff]
                                              [AoC-Start-Time]
                                              [AoC-Unit]
                                              {AoC-Price}
                                 [AoC-Confirmation]
```

In the above syntax, AoC-Balance is the balance of the master account of the user, measured in Fen (Renminbi). If one user has multiple accounts, the system may select only the balance of the master account or the balance of all accounts, and grants a calculated value to the AoC-Balance for delivery.

AoC-Language-ID: language version of the user, which is an enumerated value. The value "0" means a hybrid voice, "1" means Chinese, "2" means English, and "3" means dialect. The default value is "1" - Chinese.

AoC-Tariff: AoC tariff segment information. The AoC-Tariff is an AVP group, and its specific syntax is as follows:

```
         AoC-Tariff::= < AVP Header >
                            [AoC-Start-Time]
```

```
                            [AoC-Unit]
                            {AoC-Price}
```

wherein:
[AoC-Start-Time]: start time of tariff segment, measured in seconds. In order to enhance the user experience, the peer may convert the AoC-Start-Time (which is a multiple of 60) into a number of minutes. For example, starting from the 1st minute, AoC-Start-Time=0 (s); starting from the 4th minute, AoC-Start-Time=180 (s). If this AVP is not carried, it means starting from the 1 st minute.
[AoC-Unit]: time unit of tariff, measured in seconds. If this AVP is not carried, it means 60 (s), namely, 1 minute.
[AoC-Price]: price, measured in Fen.
AoC-Confirmation: AoC confirmation information, which is adapted to notify the OCS that the AoC of the service has been confirmed and it is not necessary to send any AoC to the client any more. If the value of AoC-Confirmation is 1, it indicates that the user confirms the need of the AoC service; the value "0" means that the user confirms no need of the AoC service.

Step 77: After the SCP receives the AoC message, if the value of AoC -Confirmation in the AoC message is 1, it indicates that the UE has activated the AoC service, and the SCP will send a prompt message (PA message) to the MSC, instructing the MSC to play a tariff prompt like "The tariff for this service is XXX. Please check whether you are sure to use it. Press 1 to confirm, and press 0 to exit".

Step 78: The UE selects whether to continue dialing or give up as required, and feeds back the corresponding information PC (press 1 or press 0) to the SCP through an MSC.

Step 79: According to the PC, the SCP determines whether the UE continues dialing, and, if so, sends RRBE, AC and CONNECT to the MSC to set up a call; or else releases the call and terminates the use of the service on the UE.

For the UE which continues the call, the MSC monitors the UE using the service. Further, the SCP sends a CCR to the OCS again according to the service consumption state to repeat the previous process (from step 72 to step 79) until the UE stops using the service. The initial request and response between SCP and OCS are "initial", the intermediate request and response are "update", and the last request and response are "terminal". The specific process is exemplified hereinafter.
*initial: The SCP (client) reports a request duration R1 to the OCS (server) through a CCR. According to a series of policies, the OCS calculates out a granted duration A1 and withholds the corresponding balance. Through a CCA, the OCS sends the granted duration to the SCP.*
*update: The SCP (client) reports a consumed duration U1 and the requested duration R2 to the OCS (server) through a CCR. The OCS rolls back the withheld A1 according to U1, and deducts balance for U1 (the balance is withheld previously with a view to successful deduction of balance here). According to a series of policies, the OCS calculates out a granted duration A2 and withholds the corresponding balance. Through a CCA, the OCS sends the granted duration to the SCP.*
*terminal: The SCP (client) reports a consumed duration U2 through the CCR. The OCS rolls back the previously withheld A2 according to U2, and deducts balance for U2.*
generally: A1=R1 means sufficient balance, and A1<R1 means deficient balance.

When the SCP releases the call, the consumed part (U2), not necessarily the whole 15 minutes, will be deducted from the withheld duration of 15 minutes.

The previous process illustrates the AoC before a conversation. The OCS can also provide AoC after a conversation by adding the information such as balance into the AVP.

Based on the previous process, the application scenarios are compared below, with respect to whether the AoC function is activated for the session service:

### Assumptions:

1. The SCP and the OCS run normally.
2. The PPS user A is in a normal state, and the balance is 50 yuan which is sufficient.
3. The basic call tariff is 0.4 yuan/minute, the domestic toll tariff is 0.07 yuan/6 seconds, and the international toll tariff is 0.8 yuan/6 seconds.

### Operations:

1. User A originates a local call, domestic toll call or international toll call randomly, and goes on-hook after continuing the conversation for T1 minutes.
2. Through the interface, the user configures and activates the AoC function, and sets the configuration in the OCS.
3. User A originates a local call, domestic toll call or international toll call randomly again, and goes on-hook after continuing the conversation for T2 minutes.

### Results:

1. No AoC is provided before conversation in the first conversation (before performing the operation).
   The expense for the conversation is T1 * X1, and the account balance after the conversation is U=5 0-T * X1.
   For local calls, X1=0.4; for domestic toll calls, X1=1.1; for international toll calls, X1=8.4.
2. Second conversation (after performing operation)
   The user hears an announcement "Your balance now is U yuan, and the current tariff is X2 yuan per minute" before the conversation.
   For local calls, X2=0.4; for domestic toll calls, X2=1.1; for international toll calls, X2=8.4.

The above embodiment is specific to session services. For other types of services such as data services or VAS, the same principles are applicable to provide preliminary tariff prompt. Taking the web browse service as an example, the application scenarios are compared below with respect to whether the AoC function is activated:

### Assumptions:

1. The CCG and OCS run normally.
2. The PPS user A is in a normal state, and the balance is 50 yuan which is sufficient.

### Operations:

User A originates a web browse service randomly at the tariff of f1 yuan/Kb or f1 yuan/second, and disconnects the service after using the service for S1 Kb or S1 seconds.
2. Through the interface, the user configures and activates the AoC function, and sets the configuration in the OCS.
3. User A originates a web browse service randomly again at the tariff of f2 yuan/Kb or f2 yuan/second, and disconnects the service after using the service for S2 Kb or S2 seconds.

### Results:

1. No AoC is provided before the first use of the web browse service. The expense for the browse service is d=S1*f1, and the account balance after the conversation is U=50-d.
2. The web interface receives a message and prompts "Your balance now is U yuan, and the current tariff is f2 yuan per Kb" or "Your balance now is U yuan, and the current tariff is f2 yuan" before the second use of the service, where the prompt is sent through a button. After the sending the prompt, the system judges whether the use will continue using the service, and if so, provides the service normally; or else disconnects the service or terminates the operation automatically. The system asks the user whether to continue using the service by means of a button here. Alternatively, the prompt may be sent by means of a short message. For example, when the user needs to start web browse service, the system sends a short message to the UE, with the tariff carried in the message. After the UE answers the short message, the system determines whether to open the access right and start charging.

In the above embodiment of the present invention, the AoC is sent beforehand. The AoC can also be sent after use of the service. Namely, after completion of using the service, the charging apparatus adds the balance and consumption information into the AoC message, and sends the AoC message through a control apparatus or access apparatus to the UE by means of a short message or by other means. See the following example:

Based on the previous assumptions, for session services: After completion of the second conversation, the UE receives this short message: "The total duration of your previous conversation is x hours y minutes and z seconds, and the total conversation expense is d yuan. Your current balance is V yuan".

In the above short message, x hours y minutes and z seconds amount to the expense of T2 Fen; d=T2*X2, and V=U-d. For local calls, X2=0.4; for domestic toll calls, X2=1.1; for international toll calls, X2=8.4.

Based on the previous assumptions, for data services: After completion of the second use of the service, the UE receives this short message: "The total traffic that you have used previously is S2 Kb, the total expense is d2 yuan, and the current balance is V yuan" or "The total duration that you have used previously is S2 seconds, the total expense is d2 yuan, and the current balance is V yuan."

In the above message, d2=S2*f2, and V=U-d2.

The previous embodiment judges whether the UE has activated the AoC service through the OCS. Alternatively, after receiving the user information, the SCP judges whether the UE has activated the AoC service, and, for the UE that has activated the AoC service, instructs the OCS to send an AoC message that carries tariff information and/or account balance information to the UE. Moreover, in the previous embodiment, the DCC protocol is applied between the SCP and the OCS. Alternatively, a private protocol may be applied.

For the previous embodiments, when service extends for several different tariffs, such as, if the service is used for a certain time period, the tariff becomes cheaper. For example, the tariff is A during the first 1-9 minutes and the tariff is B from the 10th minute. In the situation, the tariff notification message can carry the tariff A and B, i.e. the tariff notification message may carry the tariff of the service currently used and/or the service to be used later. So for the embodiment of the present invention, the tariff of the service to be used includes the tariff of the service to be currently used or/and to be used later.

The previous embodiment sends a tariff prompt to the UE beforehand, and the user selects whether to continue using the service or cancel. Therefore, the tariff is more transparent to the users, without the need of complex charging modes.

Although detailed description is made for the previous embodiments of this invention to describe rather than restrict the technical solution of the present invention, it is to be understood that those skilled in the field can make various modifications and equivalent substitutions to the technical solutions under the previous embodiments of the invention.

## Claims

1. A charging apparatus, for charging a User Equipment, UE for a service, the apparatus adapted to send a tariff notification message carrying the tariff of the service to be used based on user information of the UE and service information of the service to notify the tariff of the service.

2. The charging apparatus according to claim 1, wherein the charging apparatus (3) comprises:
an expense module (31), adapted to obtain the tariff of the service corresponding to the service information according to the service information;
a judging module (32), adapted to judge whether the UE corresponding to the user information has activated the tariff notification service according to the user information corresponding to the service information; and
a notifying module (33), adapted to add the tariff of the service to be used corresponding to the UE which has activated the tariff notification service into the tariff notification message, and send the tariff notification message.

3. The charging apparatus according to claim 2, wherein, the judge module (32) judges whether the tariff notification service has been activated according to the user information corresponding to the service after the expense module (31) obtains the tariff of the service to be used, so as to avoid further operations subsequent to failure of the expense module.

4. A charging system for charging a User Equipment, UE, for a service, the charging system comprising the charging apparatus (3) according to any one of claims1 to 3, an access apparatus (1), adapted to enable an access of a UE and prompt the tariff of the service to the UE; a control apparatus (2), adapted to obtain the user information corresponding to the UE and service information corresponding to the service according to the UE and the service respectively;
wherein, the control apparatus is further adapted to send a prompt message carrying the tariff of the service to be used to the access apparatus (1) in response to receiving the tariff notification message from the charging apparatus.

5. The charging system according to claim 4, wherein the access apparatus(1) further comprises:
an access module(11), adapted to enable an access of a UE; and
a prompt module(12), adapted to notify the tariff of the service to be used by the UE to the UE response to receiving the tariff notification message from the charging apparatus.

6. The charging system according to claim 4, wherein, the control apparatus (2) further comprises:
a request module (21), adapted to obtain the corresponding user information and the service information corresponding to the service according to the UE and the service, and send the user information and service information to the charging apparatus(3); and
a response module(22), adapted to send a prompt message to the prompt module(12) in response to receiving the tariff notification message from the Charging apparatus(3),
wherein the prompt message carries the tariff of the service.

7. The charging system according to claim 4, wherein, the service is session service subjected to duration-based charging, the access apparatus (1) is an Mobile Switch Center (MSC) or Service Switching Point (SSP), correspondingly, the control module(2) is an Service Control Point(SCP), the charging apparatus(3) is a Online Charging System(OCS).

8. The charging system according to claim 4, wherein, the service is data service subjected to traffic-based charging, the access apparatus (1) is a Gateway GPRS Supporting Node (GGSN) or Packet Data Service Node (PDSN), correspondingly, the control module (2) is a Content Charging Gateway (CCG), the charging apparatus (3) is a Online Charging System (OCS).

9. The charging system according to claim 4, wherein, the service is Value Added Service, AS, subjected to event-based charging, the access apparatus (1) is an Integrated Service Management Access Point (ISMAP), correspondingly, the control module (2) is an Integrated Service Management Platform (ISMP), the charging apparatus(3) is a Online Charging System (OCS).

10. A charging method, for charging User Equipment, UE, for a service **characterized in**, comprising:
receiving user information and service information, wherein the user information corresponds to the UE, and the service information corresponds to the service (61); obtaining the tariff of the service to be used corresponding to the service information according to the service information (62);
judging whether the UE corresponding to the user information has activated a tariff notification service according to the user information, and sending a tariff notification message carrying the tariff of the service to be used so as to make it possible to notify the UE which has activated the tariff notification service (63).

11. The method according claim 10, wherein, the user information and service information is added to a Credit Control Request (CCR), correspondingly, the receiving user information and service information further comprises: receiving user information and service information by receiving the Credit Control Request (CCR) (73); and the sending a tariff notification message carrying the tariff of the service to be used further comprises: sending a AoC message carrying the tariff (76) through a Credit Control Answer (CCA) in response to the Credit Control Request (CCR) (76).

12. The method according claim 11, the method further comprising: performing rating and withholds an account balance according to the tariff and the service request quantity (74).

13. The method according claim 11, wherein, the judging whether the UE corresponding to the user information has activated tariff notification service according to the user information further comprises: judging whether the UE corresponding to the user information has activated AoC service according to the user information and preset subscription relationship (75).

14. The method according claim 13, wherein, if the UE has activated the AoC service, AoC-Confirmation information is further added to the AoC message to indicate the UE has activated the AoC service.

15. The method according to claim 11, wherein, the service information further comprises service type, and the obtaining the tariff of the service to be used corresponding to the service information according to the service information further comprises: obtaining the tariff of the service according to the service type and the preset charging policy (74).

16. A charging method, for charging User Equipment, UE for a service, **characterized in**, comprising:
obtaining user information and service information from an access apparatus, wherein the user information corresponds to the UE and the service information corresponds to the current service used by the UE (72);
sending user information and service information to a charging apparatus (73);
receiving a tariff notification message carrying the tariff of the service to be used from the charging apparatus, and sending a prompt message carrying the tariff of the service to be used to the access apparatus to notify the tariff to the UE (77).

17. The charging method according to claim 15, wherein the obtaining user information and service information from an access apparatus further comprises:
receiving Initial Detect Point (IDP) message carrying the subscription ID of the UE and the called party ID called by the UE (72),
obtaining the subscription ID of the UE and the party called ID according the IDP message, obtaining location information according to the subscriber ID of the UE and the called ID (72) ,
translating short number and judging whether the call is inside or outside the network according to the subscription ID and the called party ID (72)., and
adding the subscription ID and the location information into the user information (73), and adding the results of short number translation and on-net/off-net judgment into the service information (73).

18. The charging method according to claim 15 or 16, the method further comprising:
receiving corresponding information fed back from the UE, determining whether the UE continues the service based on the corresponding information, instructing the access apparatus to establish the service if determining the UE continues the service, otherwise, terminating the current service (78, 79).

19. The charging method according to any one of claim 10 to 17, wherein, the service comprises any one of the followings: session service, data service and value added service (VAS).
